# EUROPÄISCHE PATENTANMELDUNG

(11) **EP 0 657 405 A1**
(43) Veröffentlichungstag der Anmeldung: **14.06.1995**
(21) Anmeldenummer: 93890239.2
(22) Anmeldetag: 10.12.1993
(51) Int. Cl.: C05F 3/00, C05F 11/00, C05F 3/06

(54) **Verfahren und Vorrichtung zum Herstellen von Dünger aus Flüssigabfällen und Ernterückständen**

(71) Anmelder: Langenecker, Bertwin, Dr., A-8570 Voitsberg (AT)
(72) Erfinder: Langenecker, Bertwin, Dr., A-8570 Voitsberg (AT)
(74) Vertreter: Casati, Wilhelm, Dipl.-Ing.

(57) **Zusammenfassung**

Die Erfindung betrifft ein Verfahren und eine Vorrichtung zum Herstellen von festem Dünger aus Flüssigabfällen, insbes. aus Gülle der Tierhaltung, wobei die Gülle mit Ernterückständen während des Vermahlens der Abfälle in situ innig vermengt wird. Im Mahlgut beträgt die Teilchengröße einige Mikrometer. Die Partikel der vermahlenen Abfälle ad- und absorbieren die Gülle vollständig, sodaß ein Produkt entsteht, das weder geruchsbelästigend ist, noch das Grundwasser gefährdet. Das Produkt enthält sämtliche Stoffe aus der Gülle und den Abfällen und stellt somit ein hochwertiges Düngemittel dar, das mit den in der Landwirtschaft üblichen Methoden und Geräten dem zu düngenden Boden zugeführt werden kann. Fig. 1 veranschaulicht das Prinzip der gleichzeitigen Einbringung von Gülle über eine Zuleitung 5 und der Ernteabfälle über eine Fördereinrichtung 10 und eine Dosiervorrichtung 11 in eine Mahl- und Mischmaschine 7.

## Beschreibung

Die Erfindung betrifft ein Verfahren zum Herstellen von Dünger aus Flüssigabfällen, insbesondere aus Gülle der Tierhaltung, Klärschlämmen u.dgl., wobei den Flüssigabfällen zerkleinerte Ernterückstände, wie Maiskolben und -stroh, Gerstenstroh oder dergleichen, insbesondere landwirtschaftlichen Produkten, zugesetzt werden.

Der heutige Stand der Technik der Aufbereitung von Gülle beruht auf zwei voneinander unterschiedlichen Versionen. Nach der einen Version wird in der als Flüssigabfall verwendeten Gülle enthaltener Feststoff (es sind dies etwa 3 bis 8 Gew.-% der Gülle) von der Flüssigphase getrennt, wonach dann die beiden Phasen voneinander getrennt weiterbehandelt werden. Der Feststoffanteil der Gülle enthält die als Düngemittel hochwertigen Substanzen, jedoch sind mehr als 90 Gew.-% der Gülle flüssig und auch nach der Abtrennung des Feststoffanteiles mit Restverbindungen von gelösten Stoffen (vor allem mit Stickstoffverbindungen) belastet, weshalb es unzulässig ist, die Flüssigphase der Gülle in Oberflächengewässer wie Bäche, Flüsse, Seen oder Teiche einzuleiten.

In einer nach dem vorstehenden Prinzip arbeitenden Anlage wurde der aus der Gülle separierte Feststoff mit Hilfe von Methan getrocknet, das bei der anaeroben Behandlung des Flüssiganteiles der Gülle anfällt. Dem getrockneten Feststoff wurden dann noch Zusatzstoffe beigemengt, womit der Düngwert des Produktes erhöht wird. Der Flüssiganteil der Gülle wurde einer anaeroben Vor- und chemischen Nachbehandlung unterzogen, wobei jedoch der von den Umweltgesetzen geforderte Reinigungsgrad nicht erzielt werden konnte, weshalb das Einleiten auch des behandelten Flüssiganteils der Gülle in Oberflächengewässer nicht erlaubt ist. Der Aufwand an Bauelementen und an Betriebsmittel für eine Gülle-Aufbereitungsanlage nach dem vorerwähnten Prinzip verursacht Investitions- und Betriebskosten in einer Höhe, die von den betroffenen Tierhaltern nicht aufzubringen ist und daher der Unterstützung der öffentlichen Hand bedarf.

Nach der zweiten Version wird die Gülle nicht in ihren Feststoffanteil und in ihre Flüssigphase separiert, sondern es wird die Gülle so belassen, wie sie anfällt und mit Ernteabfällen vermengt. In der denkbar einfachsten Form geschieht dies bei der Tierhaltung auf Stroh-Einstreu in den Tierständen im Stall; nach dem Lagern und Verrotten mit anschließendem Kompostieren entsteht aus dem Stallmist nach geraumer Zeit ein Dünger, wie er seit altersher auf die zu düngenden Flächen ausgebracht wird. Das vielschichtige Umweltproblem der Gülle wird aber damit nicht gelöst.

Eine Verbesserung der Situation hat man sich von dem im Dokument HU-T42418 beschriebenen Verfahren erhofft. Danach wird landwirtschaftlicher Abfall auf Stoppelfeldern (oder an anderen Entstehungsorten) gesammelt und, in Ballen verpreßt, aufbewahrt. Wenn es dann zur Aufbereitung von Gülle kommt, soll der in Ballen gespeicherte Abfall in einer Ballenzupfermaschine zerkleinert und allenfalls zerhackt werden, bis Stücke aus Stroh oder anderen Abfällen mit weniger als etwa 25 mm Größe zustandekommen, die sich handlich mit der Gülle vermengen lassen. Dem Dokument zufolge soll das entstehende Gemisch entweder nach dem Kompostieren als Dünger verwendbar sein oder zur Wärmeerzeugung in automatisch gesteuerten Kesselanlagen verfeuert werden können.

Das gemäß dem letztgenannten Dokument hergestellte Gemisch aus Ernteabfällen und Gülle ist zwar handlich und gut zu manipulieren, jedoch wird die Gülle von den bis zu 25 mm großen Abfallstücken weder vollständig aufgesaugt noch gebunden, und es sind - wie ein Versuch zeigte - auch keine Reaktionen der Gülle mit dem Abfall festzustellen. Es liegt vielmehr ein heterogenes Gemisch von Abfall und Gülle vor, aus dem die in ihrer Konsistenz belassene, unveränderte Gülle abrinnen und in darunter liegende Böden versickern kann, wodurch das Grundwasser nach wie vor gefährdet ist und auch der geruchsbelästigende Gasaustritt aus der Gülle nicht unterbunden werden kann, sodaß auch noch die Atmosphäre belastet wird. Diese gravierenden Mängel werden auch durch das empfohlene Kompostieren des Gemisches nicht spürbar - und schon gar nicht restlos - beseitigt.

Es wurden auch schon versuchsweise Ernteabfälle zu kleinen und zu kleinsten Teilchen vermahlen und mit der Gülle innigst vermengt. Die Qualität des dabei erzeugten festen Düngers war überraschend gut.

Da jedoch die Abfälle trocken vermahlt und das entstandene Mahlgut mit der Güllt vermengt wurden, war beim trockenen Vermahlen Explosionsgefahr (Staubexplosion) gegeben, sobald die Teilchen eine bestimmte Größe unterschritten. Zum anderen waren zwei Maschinen einzusetzen, eine zum Vermahlen und eine zum innigen Vermengen des vermahlenen Gutes mit der Gülle, sowie Vorrichtungen zum Manipulieren des (staubförmigen) Mahlgutes und selbstverständlich auch Schutzvorkehrungen gegen Staubexplosionen (beispielsweise Zugabe von Inertgas).

Wenn auch die auf diese Art und Weise labormäßig hergestellten Düngerproben von beachtlicher Güte und Qualität sind, so ist ein solches Verfahren für den großtechnischen Einsatz kaum zu empfehlen.

In der DE-OS 3 927 486 wurde vorgeschlagen, die Gülle zunächst so, wie sie anfällt, in einem Behälter mit Rührwerk mit Branntkalk (CaO) vorzubehandeln. Dabei setzt in der aus Gülle und Branntkalk bestehenden Masse bei intensiver Belüftung nach 1 - 2 Stunden eine Gärung ein. Nach einem Tag kommt eine schaumig-sahnige Masse zustande. In einem nächsten Verfahrensschritt soll die Masse in einen Durchlaufmischer gepumpt werden, wo pro Kubikmeter Masse 500 bis 1000 kg Feststoff (z.B. Ernterückstände, Holz oder auch Erdaushub) zugemischt werden, nachdem diese Materialien zerkleinert worden sind. Über die Größe der Stücke nach dem Zerkleinern sind keine Angaben dem Dokument zu entnehmen. Es handelt sich um "gesiebten" Bauschutt und um "gehäcksteltes" Stroh, Rinde u.dgl. Ähnlich wie gemäß der HU-T 42418 dürfte es sich jedoch um Stücke von einigen Millimetern Größe handeln. Das Gemisch aus der mit CaO vorbehandelten Gülle und Feststoffen soll dann gemäß der DE-OS 39 27 486 zur Nachkompostierung auf eine Deponie gegeben und dort innerhalb von 8 Tagen mehrmals umgesetzt und belüftet werden. Alles in allem vergehen mehrere Tage und sind mehrere Verfahrensschritte durchzuführen, bis aus der Gülle das vorgeschlagene Produkt gemäß dem bekannten Dokument entsteht. Ob dieses Produkt ohne Gefährdung der Umwelt zustandekommt und bedenkenlos als Dünger verwendet werden kann, muß in Frage gestellt werden. Das Dokument verweist auf eine bakteriologische Reaktion (Gärung nach Zugabe von CaO) und empfiehlt, bei der Gärung entstehende Ammoniakgase (Dämpfe) aufzufangen und in den Prozeß rückzuführen. Ob und inwieweit tatsächlich verhindert wird, daß Gase ins Freie gelangen, ist dem Dokument nicht zu entnehmen. Es ist auch nicht zu erkennen, weshalb die Bindung der "schaumig-sahnigen Masse" an Ernterückständen oder an anderen Abfallstoffen stärker sein sollte als bei dem im Dokument HU-T42418 beschriebenen Prozeß. Damit ist jedoch auch bei einem Vorgehen gemäß der DE-OS 39 27 486 zu befürchten, daß Gülle bzw. die aus Gülle und Branntkalk entstandene Masse in das Grundwasser einsickert.

Die vorstehenden Ausführungen zeigen die Komplexität der Aufbereitung von Flüssigabfällen, insbesondere von Gülle und deren Verwertung als Dünger auf.

Aufgabe der Erfindung ist es nun, das aktuelle Umweltproblem der weltweit in großen Mengen anfallenden Flüssigabfälle, insbesondere von Gülle, wirtschaftlich und umweltfreundlich zu lösen. Flüssigabfälle, vor allem Gülle, tragen mit geruchsbelästigender Gasentweichung zum globalen Treibhauseffekt und zum "Ozonloch" bei. Darüberhinaus gefährdet Gülle, wenn sie auf den Boden verbracht wird, das Grundwasser, vor allem, wenn in althergebrachter Art und Weise die Gülle so wie sie anfällt, durch Versprühen oder durch Einbringen in den Boden unter Druck, als Düngemittel auf landwirtschaftliche Flächen ausgebracht wird. Deshalb wird nach Alternativverfahren gesucht, die das Problem der laufend anfallenden Flüssigabfälle, insbesondere von Gülle, umweltgerecht lösen und zugleich die in den Flüssigabfällen, insbesondere in der Gülle, enthaltenen, für landwirtschaftlich genutzte Böden wertvollen Substanzen zu verwerten gestatten.

Erreicht wird dies bei einem Verfahren der eingangs erwähnten Art, wenn erfindungsgemäß das Zerkleinern der Ernterückstände zugleich mit der Vermengung mit den Flüssigabfällen durchgeführt wird, insbesondere auf einen Partikeldurchmesser zwischen 100 µm und 1 µm, insbesondere auf einen Partikeldurchmesser von einigen Mikrometer, wobei die Flüssigabfälle an und in den Ernterückständen adsorbiert bzw. absorbiert werden. Bei Anwendung des erfindungsgemäßen Verfahrens werden die Flüssigabfälle mit dem Mahlgut in situ innig vermengt. Durch das Zerkleinern zu Partikeln mit Durchmessern in dem angeführten Bereich wird die Oberfläche der Feststoffe zu so großem Ad- und Absorptionsvermögen aktiviert, daß die Flüssigabfälle, insbesondere die Gülle, vollständig vom Feststoff aufgenommen wird und mit diesem einen hochwertigen (festen) Dünger entstehen läßt, der sämtliche Substanzen (Nährstoffe für den Boden) enthält, die in den Mahl- und Mischkomponenten vorhanden sind, sodaß sie von dem damit gedüngten Boden vollends umgesetzt werden.

Das durch Einbringung der Ernterückstände zugleich mit den Flüssigkeiten in ein und dieselbe Mahlvorrichtung und das in situ Vermahlen der beiden Komponenten erreichte Düngemittel läßt sich hinsichtlich seiner Qualität im Bilde der Mechano-Chemie (auch "Tribochemie") durchaus verständlich machen (s. "Mechanochemische Reaktionen", S.PAJAKOFF; Österr.Chemie-Zeitschr. S.25-30; 1985). Es ist eine bekannte Erfahrung, daß chemische Reaktionen durch Schlag, Reibung oder Stoß, also durch Zuführen von Energie, ausgelöst oder beschleunigt werden können; bekannt ist auch, daß bei (organischen) Stoffen beim Zerkleinern neben der Oberflächenvergrößerung eine Oberflächenaktivierung bewirkt wird, was dazu führt, daß die Substanzen an den mechanisch stark beanspruchten Stellen lebhaft mit umgebenden Medien oder Komponenten reagieren. Für das erfindungsgemäße Verfahren bedeutet dies, daß mit dem Vermahlen von Ernteabfällen zu Teilchen mit Korngrößen von 0,1 mm bis einige µm die Feststoffe zur größtmöglichen Adsorptions- und Reaktionsfähigkeit aktiviert werden. Es kommt somit zu chemischen Reaktionen der organischen Inhaltsstoffe der Flüssigabfälle, insbesondere der Gülle mit den Ernterückständen, die so effizient und rasch ablaufen, daß das Endprodukt auch ohne Kompostieren als Dünger von hoher Güte und Qualität ausgebracht werden kann. Zur Veranschaulichung des durch das erfindungsgemäße Verfahren erzielbaren Effektes wird das Wasserrückhaltevermögen von Langstroh, Häcksel und Feinstroh (bei 21°C und Raumatmosphäre) gemessen und die Meßergebnisse in Form eines Schaubildes dargestellt, das unten wiedergeben ist. Das Feinstroh wurde durch Mahlen von Häcksel zu staubförmigen Teilchen in einem Durchmesserbereich unter 0,1 mm bis hinunter zu einigen µm hergestellt, und einmal trocken vermahlen und danach in einem Rührwerk mit Gülle vermengt (Kurve (a)), und zum anderen Mal (Kurve (b)) in situ naß mit Gülle vermengt, aufbereitet.

In beiden Versionen waren Partikelgrößen und die im Lichtmikroskop untersuchten, aufgerissenen Zellstrukturen der Partikel einander gleich.

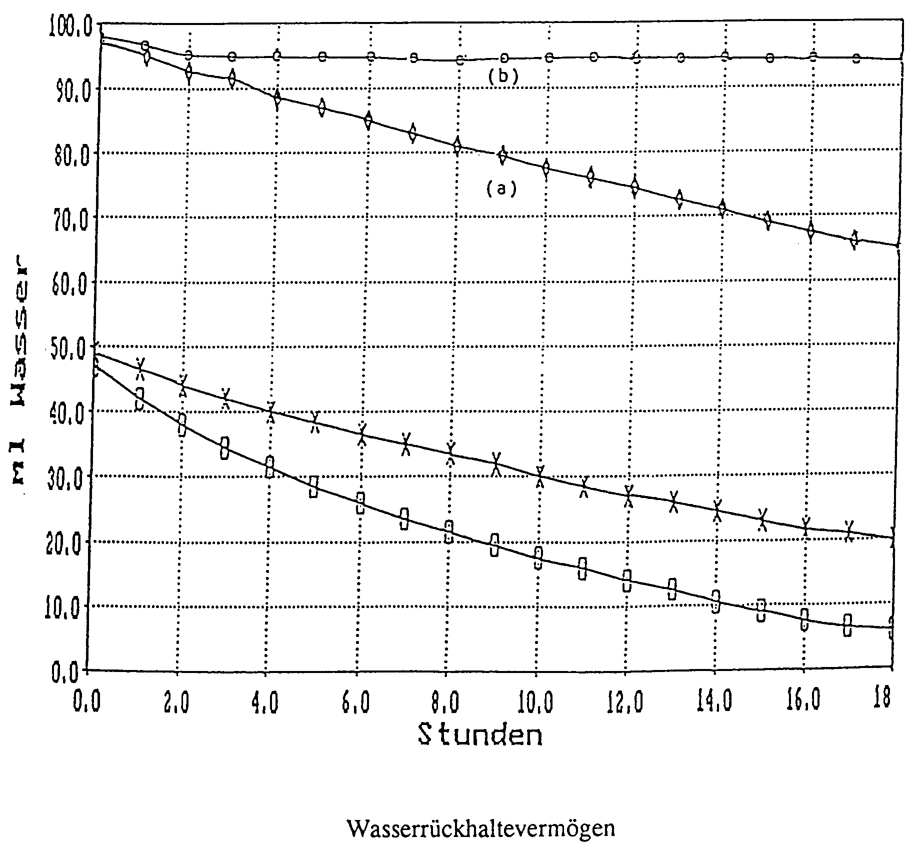

Aus dem Schaubild ist das geringe Rückhaltevermögen von Langstroh und Häcksel zu erkennen. Langstroh ist die althergebrachte Einstreu bei der ländlichen Tierhaltung, und Häcksel wird im oben erwähnten Dokument HU-T42418 empfohlen. Ganz erheblich besser ist das Wasserrückhaltevermögen von Feinstroh gemäß Kurve (a), wonach erst nach 18 Stunden 35 % an Wassergehalt abgegeben wurden. Das Ergebnis bei Anwendung der erfindungsgemäßen Verfahrensführung zeigt die Kurve (b). Hiebei tritt nur ganz zu Beginn des Beobachtungszeitraumes von 18 Stunden ein Wasserverlust auf. Für die Praxis bedeutet dies jedoch nur, daß das aufbereitete Produkt nicht unmittelbar nach der Entnahme aus der Mahl- und Mischmaschine ausgebracht werden soll, sondern vielmehr ein paar Stunden zwischengelagert werden soll. Der Gehalt an Flüssigkeit nach dem "Überschußwasser" ist verfahrensgemäß, praktisch untrennbar, im Produkt gebunden.

Das erfindungsgemäße Verfahren kann noch weiter verfeinert werden, wenn Flüssigabfälle, insbesondere Gülle, aufbereitet werden soll, deren pH-Wert außerhalb eines Bereiches von etwa 7,5 - 9,0 liegt. In solchen Fällen ist die Zugabe von umweltverträglichen pH-Regulatoren empfehlenswert, beispielsweise von Essigsäure (zum allfälligen Herabsetzen des pH-Wertes) oder Kalk (als Base zum Anheben des pH-Wertes). Auch Wasserstoffperoxid kann verwendet werden.

Bei Anwendung des erfindungsgemäßen Verfahrens werden die Probleme der Verwertung von organische Stoffe enthaltendem Flüssigabfall, beispielsweise Gülle, in einem einzigen Verfahrensschritt effizient, wirtschaftlich und umweltfreundlich gelöst.

Nachstehend wird anhand der Zeichnung ein Ausführungsbeispiel einer erfindungsgemäßen Anlage näher erläutert, in der das erfindungsgemäße Verfahren ausgeübt werden kann. Es zeigen,

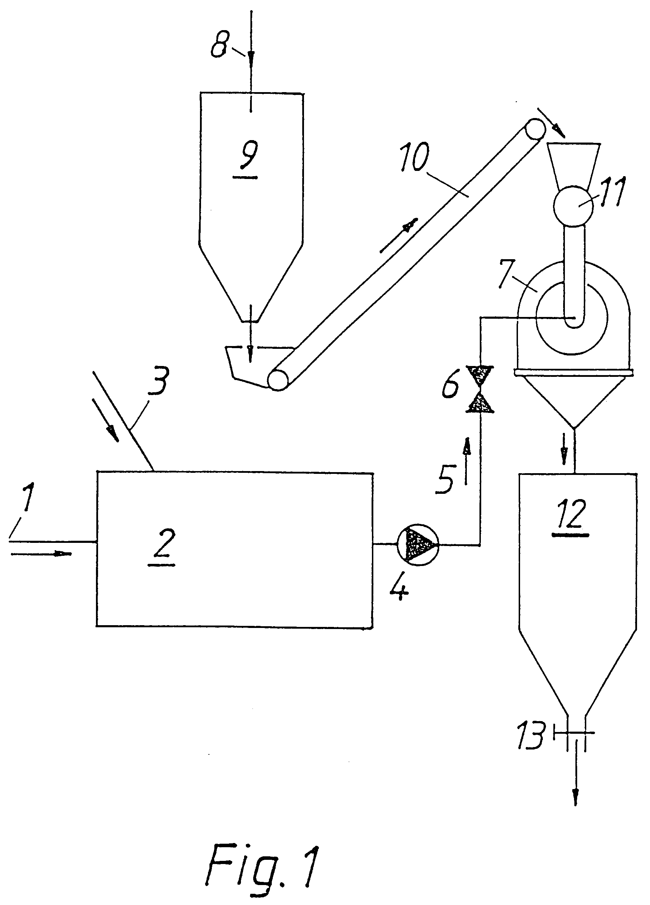

Fig. 1 das Prinzipschema der Anlage, und
Fig. 2 schaubildlich, ein Detail der Anlage.

Mit 2 ist ein Behälter bezeichnet, dem über eine Zuleitung 1 die aufzubereitende Gülle zugeführt wird. Von diesem Behälter wird der Flüssigabfall (Gülle) mittels einer Pumpe 4 über ein Regulierventil 6 dosiert in den Aufbereitungsprozeß eingebracht. Wenn der pH-Wert der Gülle unter 7,5 oder über 9,0 liegt, ist es zweckmäßig, über eine weitere Zuleitung 3 entsprechende pH-Regulatoren zum Einstellen des für die Aufbereitung optimalen pH-Wertes der Gülle zuzuführen. Ein pH-Bereich von 7,5 bis 9,0 ist optimal. Als pH-Regulatoren sind die umweltverträglichen Substanzen Essigsäure (zum Herabsetzen des pH-Wertes) bzw. (gelöschter) Kalk (als Base zum Anheben des pH-Wertes) zu empfehlen. Die Pumpe 4 kann eine Mohno-Pumpe sein, welche die Gülle aus dem Behälter 2 über eine Zuleitung 5 in einer im Regulierventil 6 einstellbaren Menge der Mahl- und Mischmaschine 7 zuführt. Hier kommt die Gülle mit den Ernteabfällen in Berührung, die vorher über eine Einbringung 8 in einem Vorratsbehälter 9 eingeführt und dort zwischengelagert wurden. Über eine Fördereinrichtung 10 nach Dosierung in einer Dosiervorrichtung 11, vorzugsweise einer Schneckendosiereinrichtung oder eine Zellenradschleuse, gelangen die Ernterückstände in die Mahl- und Mischmaschine 7. Hier erfolgt das Vermahlen der Feststoffe zu Partikeln, deren Durchmesser einige Mikrometer beträgt. Zugleich werden die Partikel in situ mit der Gülle vermengt. Das zustandekommende Produkt wird in einem Sammelbehälter 12 aufgefangen und kann aus diesem über eine Klappe 13 entnommen werden.

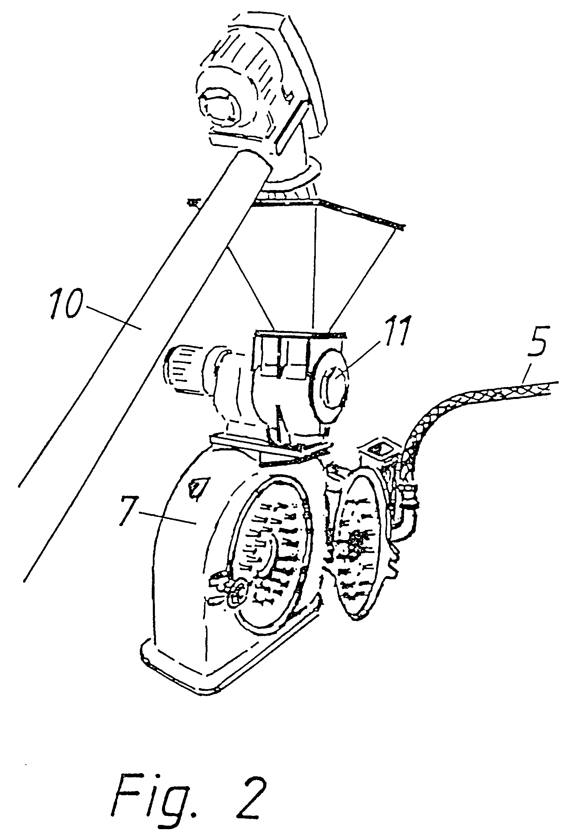

Fig. 2 stellt die Mahl- und Mischmaschine 7 mit der Zuleitung 5 für die Gülle und die Fördereinrichtung 10 mit der Dosiereinrichtung 11 für die Ernterückstände mehr im Detail dar. Zum Vermahlen der Ernterückstände (organische Feststoffe) und zum in situ-Vermengen mit der Gülle haben sich Mühlen mit Stiftscheiben bewährt, wie sie am Deckel (in Fig. 2 geöffnet gezeigt) und auch am Rotor angebracht sind. Es können jedoch anstelle der Stiftscheiben auch andere Zerkleinerungswerkzeuge verwendet werden, so z.B. Pendelschläger, Schlagkreuze oder -scheiben, Wirbelstromrotoren oder auch Schneidmesser.

Eine Mahl- und Mischmaschine mit einem Durchsatz von ca. 2000 Liter/Stunde Gülle (Feststoffanteil ca. 8 Gew.-%) kann bei einer Dehzahl von 6000 U/min bis zu 600 kg/h an Ernteabfällen (z.B. Gerstenstroh, Maisstrünke und -kolben) aufbereiten; die erforderliche Antriebsleistung beträgt größenordnungsmäßig 20kW. Die Qualität des hiebei hergestellten Düngers entspricht den in der ÖNorm S 2200 festgelegten Anforderungen. Der Dünger ist somit umweltverträglich im Sinne strengster Qualitätsvorschriften. Die gleichen Qualitätsanforderungen erfüllt auch ein nach dem erfindungsgemäßen Verfahren unter Verwendung von Klärschlämmen als Flüssigabfall hergestellter Dünger.Die Düngerherstellung kann dabei beispielsweise mit einer Mahl- und Mischmaschine erfolgen, die bei einem Durchsatz von ca. 5000 l/h Klärschlamm mit ca. 750 kg/h Ernteabfällen (z.B. Gerstenstroh) bei 6000 U/min Maschinendrehzahl, festen Dünger liefert. Wenn die aufzubereitenden Flüssigabfälle mit umweltschädlichen Inhaltsstoffen belastet sind, beispielsweise mit Schwermetallen, können diese Inhaltsstoffe in einem dem vorliegenden Verfahren vorgeschalteten Verfahrensschritt konventioneller Art, aus dem Flüssigabfall entzogen und getrennt auf Deponie oder wieder verwertet werden. Ändert sich der eingesetzte Flüssigabfall hinsichtlich seines Gehaltes an Feststoffen, so wird in jenem Ausmaß, um welches der Feststoffgehalt des Flüssigabfalles abgenommen hat, ein Mehr an Ernterückständen im erfindungsgemäßen Verfahren eingesetzt. Gülle streut hinsichtlich des Feststoffanteiles zwischen 1 bis 12 %, im Regelfall liegt der Feststoffanteil zwischen 3 und 8 Gew.-%.

## Patentansprüche

1. Verfahren zum Herstellen von Dünger aus Flüssigabfällen, insbesondere aus Gülle der Tierhaltung, Klärschlämmen u.dgl., wobei den Flüssigabfällen zerkleinerte Ernterückstände, wie Maiskolben und -stroh, Gerstenstroh oder dergleichen, insbesondere landwirtschaftlichen Produkten zugesetzt werden, dadurch gekennzeichnet, daß das Zerkleinern der Ernterückstände zugleich mit der Vermengung mit den Flüssigabfällen durchgeführt wird, insbesondere auf einen Partikeldurchmesser zwischen 100 µm und 1 µm, insbesondere auf einen Partikeldurchmesser von einigen Mikrometer, wobei die Flüssigabfälle an und in den Ernterückständen adsorbiert bzw. absorbiert werden.

2. Verfahren nach Anspruch 1, dadurch gekennzeichnet, daß der pH-Wert der Flüssigabfälle, insbesondere der Gülle vor oder/und während ihrer Berührung und Vermengung mit den Ernterückständen darauf eingestellt wird, daß Gasentweichung aus den Flüssigabfällen unterbunden wird, indem umweltverträgliche Säuren oder Basen, vorzugsweise Essigsäure oder (gelöschter) Kalk, Wasserstoffperoxid, zugesetzt werden.

3. Verfahren nach Anspruch 2, dadurch gekennzeichnet, daß der pH-Wert auf 7,5 bis 9,0 eingestellt wird.

4. Vorrichtung zur Durchführung des Verfahrens nach einem der Ansprüche 1 bis 3, dadurch gekennzeichnet, daß ein Vorratsbehälter (9) für die Ernterückstände vorgesehen ist und daß Förder- und Dosiervorrichtung (10) bzw. (11) zur Zufuhr und Dosierung der Ernterückstände des Vorratsbehälters (9) in eine Mahl- und Mischmaschine (7) vorgesehen sind, in welcher die Ernterückstände mit der Mahl- und Mischmaschine (7) über einer Pumpe (4) zugeführten Flüssigabfällen vermengt werden und die Ernterückstände in der Maschine (7) mittels relativ zueinander bewegten Maschinenelementen, wie umlaufenden, mit Stiften bestückten Scheiben oder Pendelschlägern, Schlagkreuzen oder -scheiben, Wirbelstromrotoren oder Rotoren mit Schneidmessern, auf einen Partikeldurchmesser zwischen 100 µm und einigen Mikrometern vermahlen werden (Fig. 1).
